Europäisches Patentamt

European Patent Office

Office européen des brevets

(19)

(11) Numéro de publication : **0 064 916**
**B1**

(12) **FASCICULE DE BREVET EUROPÉEN**

(45) Date de publication du fascicule du brevet :
30.01.85

(51) Int. Cl.⁴ : **C 04 B 28/20**

(21) Numéro de dépôt : 82400777.7

(22) Date de dépôt : 29.04.82

(54) **Masse silico-calcaire à haute porosité et procédé de préparation.**

(30) Priorité : 13.05.81 FR 8109538

(43) Date de publication de la demande :
17.11.82 Bulletin 82/46

(45) Mention de la délivrance du brevet :
30.01.85 Bulletin 85/05

(84) Etats contractants désignés :
AT BE CH DE FR GB IT LI LU NL SE

(56) Documents cités :
EP-A- 0 007 586
DE-A- 2 318 135
DE-A- 2 644 116
CHEMICAL ABSTRACTS, vol. 79, no. 6, 24 septembre
1973, page 227, référence 69812q, COLUMBUS OHIO
(US)
CHEMICAL ABSTRACTS, vol. 79, no. 5, 10 septembre
1973, page 262,263, référence 57195c, COLUMBUS
OHIO (US)
CHEMICAL ABSTRACTS, vol. 88, 1978, page 366,
référence 176140b, COLUMBUS OHIO (US)

(73) Titulaire : **L'AIR LIQUIDE, SOCIETE ANONYME POUR
L'ETUDE ET L'EXPLOITATION DES PROCEDES
GEORGES CLAUDE**
**75, Qual d'Orsay**
**F-75321 Paris Cedex 07 (FR)**

(72) Inventeur : **Bruni, Maurice**
**12, rue des Ardennes**
**F-93290 Tremblay-lès-Gonesse (FR)**
Inventeur : **Delode, Georges**
**8, avenue Boileau**
**F-94500 Champigny-sur-Marne (FR)**
Inventeur : **Perraudin, Rolland**
**120, avenue Gambetta**
**F-93170 Bagnolet (FR)**

(74) Mandataire : **Bouton Neuvy, Liliane et al**
**L'Air liquide, Société Anonyme pour L'Etude et
L'Exploitation des Procédés Georges Claude 75,
Quai d'Orsay**
**F-75321 Paris Cedex 07 (FR)**

Il est rappelé que : Dans un délai de neuf mois à compter de la date de publication de la mention de la délivrance du
brevet européen toute personne peut faire opposition au brevet européen délivré, auprès de l'Office européen des
brevets. L'opposition doit être formée par écrit et motivée. Elle n'est réputée formée qu'après paiement de la taxe
d'opposition (Art. 99(1) Convention sur le brevet européen).

**Description**

La présente invention concerne une masse silico-calcaire à haute porosité, utilisable notamment dans le domaine des matières de garnissage pour des récipients destinés à emmagasiner des gaz dissous et dans celui des matériaux isolants.

Dans la pratique industrielle courante, les masses poreuses connues de ce type sont fabriquées à partir d'un mélange intime de chaux, silice broyée ou fossile et d'amiante en suspension dans l'eau. La pâte ainsi obtenue introduite dans des récipients, moules ou bouteilles, est ensuite soumis à l'action de la chaleur en autoclave pour initier et réaliser complètement la réaction chaux-silice qui donne naissance au silico-calcaire ; puis on transfère dans un four de séchage pour éliminer l'eau et créer la porosité recherchée.

Par la demande de brevet allemand DE-A-2.318.135 on connaît un procédé de préparation de briques silico-calcaires par pressage d'un mélange relativement sec de silice ultra-fine et de chaux.

D'autre part, le procédé de fabrication de granulats silico-calcaires connu par la demande européenne EP-A-0.007.586 met en œuvre une pâte aqueuse mousseuse contenant le cas échéant de la silice ultra-fine en faible quantité.

L'amiante est ajoutée à la composition aqueuse de silice et de chaux pour son action de fibre renforçatrice et d'agent de suspension. Or les récentes contraintes relatives aux conditions d'hygiène et de sécurité liées à la manipulation de l'amiante ont amené à reconsidérer l'emploi de cette fibre naturelle dont les propriétés caractéristiques, dans la fabrication des masses silico-calcaires poreuses, sont d'armer la structure cristalline et de concourir au maintien de la suspension des produits solides : silice et chaux dans une grande quantité d'eau.

On sait que la stabilisation de la suspension peut être nettement améliorée par l'emploi d'agents de suspension. Par le brevet français n° 1.358.446, on connaît l'effet de l'addition de quantités substantielles jusqu'à 10 % d'agents organiques de mise en suspension. Certains dérivés de la cellulose, tels les alkylhydroxyalkylcelluloses, en particulier les méthyl et éthylhydroxyéthylcelluloses permettent d'obtenir une excellente stabilisation de la suspension. La dose à introduire varie avec le degré de stabilisation recherché et avec la nature de l'agent de suspension.

On a envisagé de compenser la suppression de l'amiante par l'adjonction d'agents de suspension organiques en fortes quantités.

Or il s'est avéré que si l'addition d'un agent de suspension organique en quantité importante peut notablement corriger le défaut de décantation des produits solides lors de la fabrication de la pâte silice/chaux et eau, par contre, du fait de la destruction de ce type de composé organique pendant la cuisson de la pâte, on a constaté une baisse des propriétés mécaniques des masses silico-calcaires à haute porosité. La fragilité et friabilité des matières poreuses ainsi obtenues sont telles qu'elles les rendent inaptes pour les applications concernées.

On a cherché à développer un phénomène de thioxotropie peu de temps après le remplissage de la bouteille ou du moule, qui permet d'effectuer le garnissage avec un mélange liquide, la prise de la pâte étant réalisée avant le dépôt des récipients dans l'autoclave.

On a trouvé que l'adjonction de silice synthétique ultrafine amorphe à forte surface spécifique de 150 à 300 m² par gramme de capacité d'absorption élevée correspondant à une quantité de dioctylphtalate en millilitres nécessaires au début d'empâtage de 100 g de produit au moins égale à 150, de préférence comprise entre 170 et 350, en remplacement total ou partiel de la silice broyée, permet d'obtenir très avantageusement par cuisson en autoclave, des masses silico-calcaires homogènes à haute porosité présentant des propriétés mécaniques satisfaisantes.

La pâte aqueuse à base d'un mélange de silice et de chaux divisées contient au moins 50 % de silice synthétique ultra-fine, et la silice ultra-fine amorphe est très avantageusement utilisée en quantité comprise entre 70 et 100 % par rapport à la quantité totale de silice.

La quantité totale de silice utilisée est légèrement supérieure à celle de la chaux, dans une proportion de 10 à 30 % et l'eau est employée en quantité au moins trois fois plus importante que les solides, de préférence dans un rapport de 3 à 4,6.

Les particules de silice synthétique ultra-fine amorphe ont une granulométrie de l'ordre de quelques microns ($\mu$m). Ces particules élémentaires peuvent s'associer en chaînes dans les trois dimensions formant ainsi une structure du type agrégat, et par séchage, les agrégats s'associent en agglomérats. Ces arrangements en agrégats et agglomérats créent une structure macroporeuse qui présente une capacité d'absorption élevée. Cette capacité d'absorption peut être exprimée par les prises de liquide en millilitres pour 100 g de produit, prises DOP ou huile. La prise DOP est égale à la quantité de dioctyphtalate en millilitres nécessaire au début d'empâtrage de 100 g de produit. Les produits ayant une capacité d'absorption au moins égale à 150 et de préférence comprise entre 170 et 350, sont adaptés à la réalisation du procédé.

Ces silices synthétiques ultrafines amorphes connues sous la désignation de pigments de silice, se présentent sous forme de poudres fines, légères de masse spécifique apparente de l'ordre de 0,25 à 0,35 kg/dm³ pouvant absorber jusqu'à plus de deux fois leur poids d'eau. Ces silices ultrafines sont, par exemple, fabriquées par pyrogénation de tétrachlorure de silicium ou par précipitation chimique en milieu aqueux d'un silicate soluble.

Les silices synthétiques ultrafines amorphes contenant une faible proportion molaire d'eau de constitution, qui peut être une fraction molaire d'environ 1/10, ainsi que les silices hydratées à faible proportion d'eau de constitution et contenant une faible fraction molaire d'oxyde d'aluminium et une faible fraction molaire d'oxyde de sodium, sont des constituants très intéressants dans l'élaboration de la pâte destinée à la fabrication d'une masse poreuse silico-calcaire. On peut citer deux silices synthétiques amorphes absorbantes répondant aux formules $10\,SiO_2$, $1\,H_2O$ et $14\,SiO_2$, $1\,Al_2O_3$, $1\,Na_2O$, $3\,H_2O$, particulièrement adaptées à la réalisation des masses poreuses silico-calcaires.

Ces silices synthétiques amorphes peuvent être utilisées seules ou en mélange.

En effet, on a parfois intérêt à contrôler le phénomène de thioxotropie, afin de travailler avec une pâte facilement manipulable pendant le garnissage des récipients, sans obligation de remplissage dans de courts délais. Cette évolution de la prise de la pâte peut être ralentie par l'emploi de silices synthétiques ultrafines amorphes ayant une capacité d'absorption un peu plus faible. Les silices ultrafines amorphes ayant un pouvoir absorbant compris entre 150 et 200, permettent d'obtenir des pâtes aisément manipulables et transférables, avec conservation à l'état liquide pendant plusieurs heures. Les silices ultrafines contenant de faibles fractions molaires d'oxyde d'aluminium et d'oxyde de sodium, chaque fraction étant par exemple de l'ordre de 1/20, permettent d'atteindre d'excellents résultats.

Des essais comparatifs conduits avec de la silice ultrafine amorphe de formule $10\,SiO_2$, $1\,H_2O$ et de la silice synthétique amorphe ultrafine de formule $14\,SiO_2$, $1\,Al_2O_3$, $1\,Na_2O$, $3\,H_2O$, ont montré l'intérêt de ces mélanges. On s'est fixé une viscosité de référence, et suivi l'évolution de la viscosité de trois pâtes réalisées avec a = 100 % de silice ultra-fine amorphe, $10\,SiO_2$, $1\,H_2O$, prise DOP 340, b = 50 % de silice $10\,SiO_2$, $1\,H_2O$, DOP 340 et 50 % de silice $14\,SiO_2$, $1\,Al_2O_3$, $1\,Na_2O$, $3\,H_2O$, DOP 180, et c = 100 % $14\,SiO_2$, $1\,Al_2O_3$, $1\,Na_2O$, $3\,H_2O$, DOP 180. Avec la pâte a, la viscosité de référence est atteinte au bout de 60 minutes, avec la pâte b, cette même viscosité apparaît après 3 heures, et dans le cas de la pâte $c_1$, cette viscosité est seulement atteinte après six heures d'évolution de la pâte à la température ambiante. Ces essais font apparaître le rôle du pouvoir absorbant de la silice.

Quand on recherche une matière silico-calcaire à haute porosité particulièrement performante, ayant une résistance mécanique élevée, non friable quand on la casse, il a été trouvé avantageux de procéder à une légère addition de fibres synthétiques non réactives, d'origine minérale ou organique, ayant une bonne résistance mécanique. La présence de ces fibres chimiques améliore la ténacité de la matière poreuse, rendant le produit moins fragile aux chocs.

Ces fibres synthétiques sont introduites dans la matière poreuse à raison de 3 à 15 % par rapport aux solides, et de préférence 4 à 6 %.

Parmi les fibres synthétiques minérales on peut citer les fibres de silicate d'alumine de synthèse qui conduisent à des résultats intéressants.

Les fibres synthétiques dites fibres chimiques du type polymère en couches, telles les fibres de carbone ou fibres carbonées, du type polymère en échelle telles les fibres de polyamide aromatique, seules ou en mélange, sont des fibres de renforcement intéressantes.

La pâte est préparée par addition des différents constituants dans l'eau : chaux, silice broyée, silice ultra-fine synthétique amorphe et fibres synthétiques sous agitation pendant 5 à 20 minutes jusqu'à obtention d'un mélange intime, puis la pâte obtenue est introduite dans les bouteilles, récipients ou moules, sous un vide partiel. Les bouteilles sont ensuite munies d'un bouchon poreux et portées en autoclave pour une cuisson d'une durée comprise entre 17 et 24 heures sous une pression de vapeur saturante d'eau d'environ une dizaine de bars, puis soumises à un séchage progressif de quelques jours, à une température maximale de 330 ºC.

Dans un premier stade de mise en œuvre, on peut procéder à l'extinction de chaux vive par mélange intime de celle-ci avec une portion de l'eau.

Le procédé de la demande permet d'obtenir des masses silico-calcaires de haute porosité, pouvant être supérieure à 90 %.

Ces matières poreuses sont particulièrement adaptées au garnissage des récipients et bouteilles destinés à emmagasiner des gaz dissous, notamment l'acétylène. La nature de ces matières les rend intéressantes dans le domaine de l'isolation thermique, et également dans le secteur du bâtiment, notamment comme isolant phonique.

Il est donné, ci-après, des exemples qui illustrent l'invention à titre non limitatif.

Exemple 1 : Fabrication sans fibres.

On mélange intimement dans un malaxeur 48,7 kg de chaux vive dans 200 litres d'eau, sous agitation pendant 10 à 15 minutes, afin de réaliser l'extinction complète de la chaux, puis on ajoute dans l'ordre 186 litres d'eau, 15 kg de silice broyée (100 μ) et 41 kg de silice synthétique ultra-fine amorphe, formule $10\,SiO_2$, $1\,H_2O$, dont les particules élémentaires sont arrangées en agrégats et agglomérats qui créent une structure macroporeuse absorbante de DOP 340 (ml pour 100 %), en maintenant l'agitation pendant 10 à 15 minutes jusqu'à l'obtention d'une pâte liquide homogène qui est rapidement introduite, sous un vide partiel de 600 millibars environ, dans les bouteilles utilisées pour le stockage d'acétylène à l'état dissous.

Les bouteilles pleines sont ensuite munies d'un bouchon poreux avant d'être portées en autoclave. La durée de la cuisson en autoclave est de 20 heures sous une pression de vapeur saturante d'eau à 10 bars, on procède ensuite à un séchage progressif pendant 4 jours, à une température maximale de 330 ºC.

Après séchage, les masses poreuses contenues dans les bouteilles sont homogènes et présentent un retrait longitudinal inférieur à 1 mm et une résistance à l'écrasement de 15 à 20 kgs/cm² (1,47 à 1,96 N/mm²) et une porosité de 90 % ± 1 %.

Exemple 2 : Fabrication avec fibres minérales.

On mélange en une seule fois 423 litres d'eau, 50 kg de chaux-vive, 57,5 kg de silice synthétique ultra-fine selon l'exemple 1 et 7 kg de fibres de silicate d'alumine de synthèse, en maintenant l'agitation pendant 20 minutes, avant le transfert dans les bouteilles.

Après cuisson et séchage dans les mêmes conditions que précédemment, les bouteilles contiennent une masse poreuse homogène titrant 89 ± 1 % de porosité et de 10 à 20 kg/cm² (0,98 à 1,96 N/mm²) de résistance à l'écrasement mécanique.

Exemple 3 : Fabrication avec fibres carbonées.

On mélange dans un premier stade 250 litres d'eau et 50 kg de chaux vive, pendant 15 minutes, afin de réaliser l'extinction complète de la chaux (température finale 56 °C ± 10 °C).

A la suite de quoi, le mélange est transféré dans un malaxeur, puis on ajoute dans l'ordre 148 litres d'eau, 8 kg de silice broyée (100 µ) et 49,5 kg de silice ultra-fine amorphe 10 SiO₂, 1 H₂O, de structure macroporeuse absorbante, dont la capacité d'absorption en ml pour 100 g : prise DOP = 280, jusqu'à obtention d'une pâte homogène, après cinq minutes de malaxage, dans laquelle on introduit en une fois 5,5 kg de fibres carbonées.

Après cuisson et séchage dans les conditions précédemment indiquées, la matière poreuse présente les caractéristiques physiques suivantes : porosité 90 % ± 1 % et résistance à l'écrasement de 20 à 35 kg/cm² (1,96 à 3,33 N/mm²).

Exemple 4 : fabrication avec fibres carbonées.

On procède à une extinction de 50 kg de chaux-vive dans 300 litres d'eau, en maintenant pendant 10 minutes une agitation énergique, puis on introduit sous agitation 205 litres d'eau et 59 kg de silice synthétique ultra-fine amorphe selon l'exemple 3, et l'on maintient l'agitation pendant 20 minutes.

On ajoute 4 kg de fibres carbonées parfaitement défibrées et l'on poursuit l'agitation pendant 10 minutes après l'introduction des fibres.

La suspension introduite dans les récipients est soumise à une cuisson sous 11 bras de vapeur saturante, pendant 20 heures, puis séchée progressivement à la pression atmosphérique, à température maximale de 330 °C jusqu'à poids constant.

La matière silico-calcaire, ainsi préparée, possède les caractéristiques physiques suivantes : une porosité de 92 % ± 1 %, densité 0,210 ± 0,05, résistance à l'écrasement de 15 à 20 kg/cm² (1,47 à 1,96 N/mm²).

Exemple 5 : Fabrication avec fibres carbonées.

On mélange dans un premier stade 250 litres d'eau et 50 kg de chaux-vive, pendant 15 minutes, afin de réaliser l'extinction complète de la chaux.

A la suite de quoi, le mélange est transféré dans un malaxeur, puis on ajoute dans l'ordre 148 litres d'eau, 28 kg de silice synthétique ultra-fine amorphe, 10 SiO₂, 1 H₂O, de structure macroporeuse absorbante, dont la capacité d'absorption en ml pour 100 g : prise DOP = 280 et 29,5 kg de silice synthétique ultra-fine amorphe, 14 SiO₂, 1 Al₂O₃, 1 Na₂O, 3 H₂O, de surface spécifique 180 m²/g, de structure macroporeuse absorbante, dont la capacité d'absorption en ml pour 100 g : prise DOP = 180, jusqu'à obtention d'une pâte homogène, après 5 minutes de malaxage, dans laquelle on introduit en une fois 5,5 kg de fibres carbonées.

Après cuisson et séchage dans les conditions précédemment indiquées, la matière poreuse présente les caractéristiques physiques suivantes : porosité 90 % ± 1 et résistance à l'écrasement de 20 à 35 kg/cm² (1,96 à 3,33 N/mm²).

Exemple 6 : Fabrication avec fibres carbonées.

On procède à une extinction de 50 kg de chaux vive dans 300 litres d'eau, en maintenant pendant 10 minutes une agitation énergétique, puis on introduit sous agitation 205 litres d'eau et 59 kg de silice synthétique ultra-fine amorphe, 14 SiO₂, 1 Al₂O₃, 1 Na₂O, 3 H₂O, de surface spécifique 180 m²/g, de structure macroporeuse absorbante dont la capacité d'absorption en ml pour 100 g : prise DOP = 180, et l'on maintient l'agitation pendant 20 minutes.

On ajoute 4 kg de fibres carbonées parfaitement défibrées, et l'on poursuit l'agitation pendant 10 minutes après l'introduction des fibres.

La suspension introduite dans les récipients est soumise à une cuisson sous 11 bars de vapeur saturante, pendant 20 heures, puis séchée progressivement à la pression atmosphérique, à température maximale de 330 °C jusqu'à poids constant.

La matière silico-calcaire, ainsi préparée, possède les caractéristiques physiques suivantes : une porosité de 92 % ± 1, densité 0,210 ± 0,05, résistance à l'écrasement de 15 à 20 kg/cm² (1,47 à 1,96 N/mm²).

**Revendications**

1. Procédé de préparation d'une masse silico-calcaire à haute porosité, par cuisson en autoclave d'une pâte aqueuse à base d'un mélange de silice et de chaux, la silice étant constituée en partie par de la silice synthétique ultra-fine, caractérisé en ce que la pâte aqueuse est obtenue à partir de silice constituée par au moins 50 % en poids de particules de silice de synthèse ultra-fine amorphe de surface d'absorption élevée, correspondant à une quantité de dioctylphtalate en millilitres nécessaire au début d'empâtage de 100 g de produit au moins égale à 150, de préférence comprise entre 170 et 350, la quantité totale de silice étant légèrement supérieure à la quantité de chaux dans une proportion de 10 à 30 %, et l'eau employée en quantité au moins trois fois plus importante que celle des solides, de préférence dans un rapport de 3 à 4,6.

2. Procédé de préparation d'une masse silico-calcaire à haute porosité selon la revendication 1, caractérisé en ce que la silice contient 70 à 100 % en poids de particules de silice de synthèse ultra-fine amorphe de surface spécifique comprise entre 150 et 300 m² par gramme et de capacité d'absorption élevée.

3. Procédé de préparation d'une masse silico-calcaire à haute porosité selon la revendication 1, caractérisé en ce que la silice de synthèse ultra-fine amorphe constituée d'agglomérats de structure macroporeuse est choisie parmi la silice contenant une faible proportion d'eau de constitution, la silice contenant en outre une faible fraction molaire d'oxyde d'aluminium et une faible fraction molaire d'oxyde de sodium, chaque type de silice étant utilisé seul ou en mélange, telles les silices synthétiques amorphes absorbantes répondant aux formules $10\ SiO_2,\ 1\ H_2O$ et $14\ SiO_2,\ 1\ Al_2O_3,\ 1\ Na_2O,\ 3\ H_2O$.

4. Procédé de préparation d'une masse silico-calcaire à haute porosité selon la revendication 1, caractérisé en ce que la pâte aqueuse à base de silice et de chaux contient en outre de 3 à 15 % en poids par rapport aux solides, de fibres synthétiques non réactives d'origine minérale ou organique, de préférence 4 à 6 %.

5. Procédé de préparation d'une masse silico-calcaire à haute porosité selon la revendication 4, caractérisé en ce que les fibres synthétiques non réactives d'origine minérale sont des fibres de silicate d'alumine de synthèse.

6. Procédé de préparation d'une masse silico-calcaire à haute porosité selon la revendication 4, caractérisé en ce que les fibres synthétiques non réactives sont du type fibres chimiques organiques telles les fibres carbonées, et les polyamides aromatiques.

7. Masse silico-calcaire à haute porosité obtenue selon la revendication 1.

8. Masse silico-calcaire à haute porosité obtenue selon la revendication 4.

9. Application des masses silico-calcaires à haute porosité selon les revendications 7 ou 8 dans le domaine des matières de garnissage pour récipients destinés à emmagasiner des gaz dissous et dans celui des matériaux isolants.

## Claims

1. Process for the preparation of a high porosity lime silica composition by baking an aqueous paste based on a mixture of silica and lime within an autoclave, the silica consisting partially of synthetic ultrafine silica, characterized in that the aqueous paste is obtained by means of silica consisting of a least 50 percent by weight of particles of ultrafine amorphous synthesis silica having a specific surface between 150 and 300 m²/g and having elevated absorption capacity corresponding to an amount of dioctylphthalate in milliliters necessary at the beginning of doughing in 100 g of product, of at least 150, preferably between 170 and 350, the total quantity of silica being slightly above the quantity of lime in the proportion of 10 to 30 percent, and the water being used in a quantity of at least three time larger than that of the solids, preferably in a ratio of 3 to 4.6.

2. Process for the preparation of a high porosity lime silica composition according to claim 1, characterized in that the silica contains 70 to 100 percent by weight of particles of ultrafine amorphous synthesis silica having a specific surface between 150 and 300 m²/g and an elevated absorption capacity.

3. Process for the preparation of a high porosity lime silica composition according to claim 1, characterized in that the ·ultrafine amorphous synthesis silica consisting of agglomerates of a macroporous structure is selected from the group consisting of the silica containing a small proportion of water of constitution and the silica containing additionally a small molar fraction of aluminum oxide and a small molar fraction of sodium oxide, each type of silica being used solely or in admixture, such as the synthetic amorphous absorbent silicas having the formula $10\ SiO_2 \cdot 1\ H_2O$ and $14\ SiO_2 \cdot 1\ Al_2O_3 \cdot 1\ Na_2O \cdot 3\ H_2O$.

4. Process for the preparation of a high porosity lime silica composition according to claim 1, characterized in that the aqueous paste based on silica and lime contains furthermore 3 to 15 percent by weight of non-reactive synthetic fibres of mineral or organic origin, preferably 4 to 6 percent.

5. Process for the preparation of a high porosity lime silica composition according to claim 4, characterized in that the non-reactive synthetic fibres of mineral origin are fibres of synthetic aluminum silicate.

6. Process for the preparation of a high porosity lime silica composition according to claim 4, characterized in that the non-reactive synthetic fibres are of the chemical organic fibre type such as carbonaceous fibres and the aromatic polyamides.

7. A porosity lime silica composition obtained according to claim 1.

8. High porosity lime silica composition obtained according to claim 4.

9. Use of high porosity lime silica compositions according to the claims 7 or 8 in the field of lining materials for recipients to store dissolved gases and in the field of insulating materials.

## Ansprüche

1. Verfahren zur Herstellung einer Kalk-Kieselsäure-Masse mit hoher Porosität durch Aushärtung einer wäßrigen Paste auf der Grundlage eines Gemisches von Kieselsäure und Kalk in einem Autoklaven, wobei die Kieselsäure teilweise aus synthetischer ultrafeiner Kieselsäure besteht, dadurch gekennzeichnet, daß die wäßrige Paste aus Kieselsäure erhalten wird, die aus wenigstens 50 Gewichts-% Teilchen von ultrafeiner amorpher.Synthesekieselsäure mit einer spezifischen Oberfläche von 150 bis 300 m²/g und mit einer erhöhten Absorptionskapazität entsprechend einer bei Beginn des Anteigens von 100 g Produkt erforderlichen Dioctylphthalatmenge in Millilitern von wenigstens 150, vorzugsweise zwischen 170 und 350, besteht, wobei die Gesamtkieselsäuremenge etwas oberhalb der Kalkmenge in einem Mengenverhältnis von 10 bis 30 % liegt und das Wasser in einer Menge von wenigstens dem Dreifachen derjenigen der Feststoffe, vorzugsweise in einem Mengenverhältnis von 3 bis 4,6, verwendet wird.

2. Verfahren zur Herstellung einer Kalk-Kieselsäure-Masse mit hoher Porosität nach Anspruch 1, dadurch gekennzeichnet, daß, daß die Kieselsäure 70 bis 100 Gewichts-% ultrafeine amorphe Synthesekieselsäureteilchen mit einer spezifischen Oberfläche zwischen 150 und 300 m²/g und erhöhter Absorptionskapazität enthält.

3. Verfahren zur Herstellung einer Kalk-Kieselsäure-Masse mit hoher Porosität nach Anspruch 1, dadurch gekennzeichnet, daß die ultrafeine amorphe Synthesekieselsäure, die aus Agglomeraten makroporöser Struktur besteht, aus der Gruppe der Kieselsäuren, die einen geringen Anteil Konstitutionswasser enthalten, und den Kieselsäuren, die außerdem einen geringen molaren Anteil an Aluminiumosid und einen geringen molaren Anteil an Natriumoxid enthalten, wobei jeder dieser Kieselsäuretypen allein oder im Gemisch benutzt wird, wie unter den synthetischen amorphen absorbierenden Kieselsäuren der Formeln 10 $SiO_2 \cdot 1 H_2O$ und 14 $SiO_2 \cdot 1 Al_2O_3 \cdot 1 Na_2O \cdot 3 H_2O$, ausgewählt ist.

4. Verfahren zur Herstellung einer Kalk-Kieselsäure-Masse mit hoher Porosität nach Anspruch 1, dadurch gekennzeichnet, daß dei wäßrige Paste auf der Grundlage von Kieselsäure und Kalk außerdem 3 bis 15 Gewichts-%, bezogen auf die Feststoffe, nichtreaktive synthetische Fasern mineralischen oder organischen Ursprungs, vorzugsweise 4 bis 6 %, enthält.

5. Verfahren zur Herstellung einer Kalk-Kieselsäure-Masse mit hoher Porosität nach Anspruch 4, dadurch gekennzeichnet, daß die nicht reaktiven synthetischen Fasern mineralischen Ursprungs Aluminiumsilikatsynthesefasern sind.

6. Verfahren zur Herstellung einer Kalk-Kieselsäure-Masse mit hoher Porosität nach Anspruch 4, dadurch gekennzeichnet, daß die nichtreaktiven Synthesefasern vom organischen Chemiefasertyp, wie kohlenstoffhaltige Fasern und aromatische Polyamidfasern, sind.

7. Kalk-Kieselsäure-Masse hoher Porosität, die nach Anspruch 1 erhalten wurde.

8. Kalk-Kieselsäure-Masse hoher Porosität, die nach Anspruch 4 erhalten wurd.

9. Verwendung von Kalk-Kieselsäure-Massen hoher Porosität gemäß den Ansprüchen 7 oder 8 auf dem Gebiet der Auskleidungsmaterialien für Behälter, die zur Lagerung von Dissousgasen bestimmt sind, und auf dem Gebiet der Isoliermaterialien.